# EUROPEAN PATENT SPECIFICATION

(11) **EP 0 667 457 B1**
(45) Date of publication and mention of the grant of the patent: **15.07.1998**
(21) Application number: 94301071.0
(22) Date of filing: 15.02.1994
(51) Int. Cl.: F15B 13/042, F16K 27/00

(54) **Spool type change-over valve**
Kolbenschieber-Wegeventil
Distributeur à tiroir axial

(43) Date of publication of application: 16.08.1995
(73) Proprietor: SMC CORPORATION, Minato-ku Tokyo 105 (JP)
(72) Inventor: Asou, Yoshio, c/o SMC CORP. Tsukuba Tech. Ctr, Tsukuba-gun, Ibaraki (JP); Hayashi, Bunya, c/o SMC CORP. Tsukuba Tech. Ctr, Tsukuba-gun, Ibaraki (JP); Sato, Hideharu, c/o SMC CORP. Tsukuba Tech. Ctr, Tsukuba-gun, Ibaraki (JP)
(74) Representative: Allam, Peter Clerk

(56) References cited:
- DE-A- 2 121 015
- DE-A- 2 650 701
- DE-B- 1 062 506

## Description

The present invention relates to a pilot-driven spool type change-over valve efficiently designed in compact form so that fluid with high flow rate can be changed over, and in particular to a pilot-driven spool type change-over valve which is placed in parallel on a manifold base and which can improve flow rate and responsiveness without increasing lateral width of valve body.

In the past, a pilot-driven spool type change-over valve is known as a change-over vale to be placed in parallel on a manifold base. In general, such a change-over valve comprises a valve body having a plurality of ports to pass pressure fluid and a valve hole communicating with these ports. A spool of oblong rectangular parallelopiped form is provided slidably in the axial direction within the valve hole. A piston driven by pilot fluid drives the spool so that the flow direction of the fluid between the plurality of ports can be changed over by sliding the spool in the axial direction. Examples of such valves are shown in US 4 245 671, US 4 718 451 and DE 2 121 015 A.

The important performance characteristics required for such pilot-driven spool type change-over valve are high flow rate of the fluid per unit time and quick responsiveness. Further, in a manifold type change-over valve assembly where a plurality of spool-type change-over valves are placed in parallel on a manifold base for manifold piping, it is necessary to reduce the mounting pitch "p" of each spool type change-over valve with respect to flow rate while giving full consideration on flow rate, i.e. it is necessary to reduce the lateral width of the spool type change-over valve.

When the manifold type change-over valve is installed, output pipes and electrical wirings are provided in the direction of valve hole of the valve body, and there is usually a surplus space for installation in this direction. For this reason, it is necessary to reduce the lateral width of the spool type change-over valve as described above even when the spool type change-over valve may become somewhat longer in the direction of the valve hole.

However, there are restrictions on the diameter of opening of each port on the above spool type change-over valve and also the diameter of the valve hole where the spool is accommodated because of the limitation of lateral width of the valve body. If one tries to narrow down the lateral width of the valve body in order to reduce the mounting pitch "p", the diameter of the opening of each port and the diameter of the valve hole have to be decreased. This leads to a reduction in the flow rate of the fluid.

As a result, the flow rate is not decreased even when lateral width of the valve body is reduced, or if there is no change in lateral width of the valve body, it is necessary to have an ability to change over the fluid with higher flow rate in order that the spool type change-over valve can be designed in compact form. In this case, however, elongating the valve body in the direction of the valve hole and increasing the stroke of the spool mean that the responsiveness is decreased. Thus, care must be taken not to impair the responsiveness.

A spool-type change-over valve according to the present invention comprises a valve body in oblong rectangular parallelopiped form having a plurality of ports to pass pressure fluid and a valve hole communicating with these ports, a spool provided slidably in axial direction within the valve hole, and a piston for driving the spool by a pilot fluid, whereby the flow direction of the fluid between the plurality of ports of is changed by sliding the spool in the axial direction by means of the piston, the shape of the opening of each of the ports is rectangular, the inner diameter of the valve hole and the lateral length of opening, i.e. the length in the inward direction of each port in the valve hole, are set to the highest value allowed by the lateral width W of the valve body, and the longitudinal length a of the opening of each port, i.e. the length of each port in the axial direction of the valve hole, is set to such a size that a characteristic value given by a/W² is 1.4 to 2.5 x 10⁻², and more preferably, 1.5 to 2.2 x 10⁻².

Such a spool type change-over valve can be in compact design without reduce flow rate even when the lateral width of the valve body is narrowed down in a pilot-driven spool type change-over valve. Therefore the valve has an ability to change over a fluid with higher flow rate without changing the lateral width of the valve body.

Also compact design of such a spool type change-over valve can be achieved without impairment of the responsiveness of the pilot-driven spool type change-over valve, even when the valve body is somewhat elongated in the direction of the valve hole.

A pilot-driven spool type change-over valve according to the present invention, has an excellent ability to change over fluid by setting efficient dimension so that the flow of the fluid per unit time is at the highest.

When a plurality of the spool type change-over valves according to the present invention are installed in parallel on a manifold base for manifold piping, an assembly of manifold type change-over valves is provided.

The invention will now be illustrated with reference to the accompanying drawings, in which:

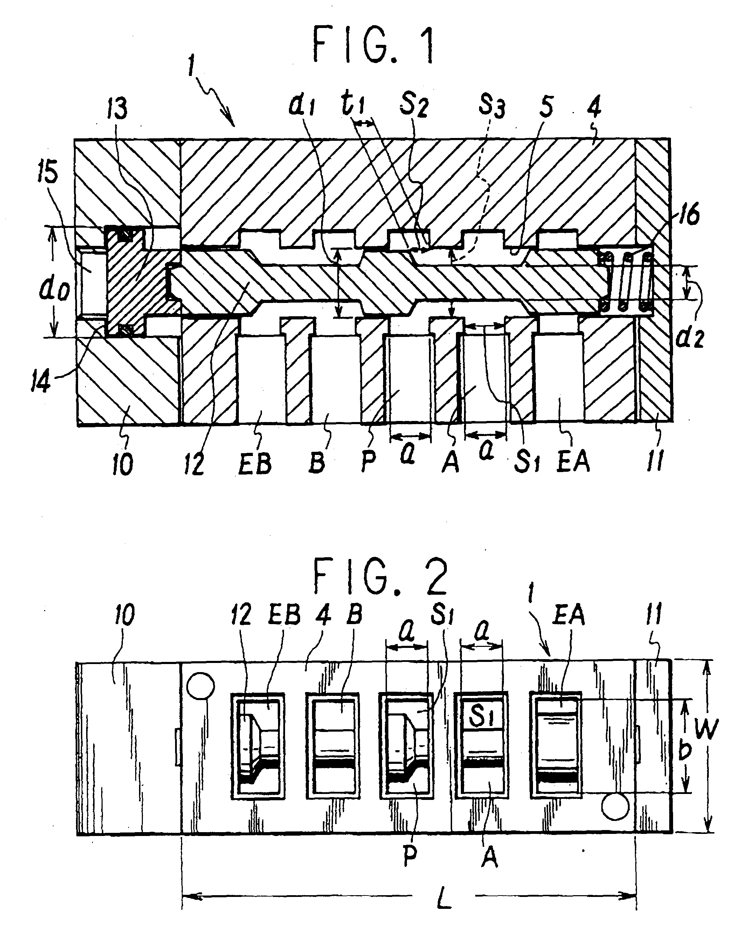

Fig. 1 is a cross-sectional view of a spool type change-over valve according to the present invention;
Fig. 2 is a bottom view of the valve shown in Fig. 1; and
Fig. 3 is a perspective view of a manifold type change-over valve assembly where a plurality of spool type change-over valves are mounted on a manifold base.

A valve body 4 in the form of an oblong rectangular parallelopiped of the change-over valve comprises a central inlet port P where pressure fluid such as compressed air flows, outlet ports A and B on both sides, and discharge ports EA and EB on both sides. There is a valve hole 5 communicating with each of these ports in the longitudinal direction, and a spool 12 is provided slidably in axial direction within the valve hole 5. Each of the ports has a rectangular shape so that shape of an opening (cross-sectional shape of flow passage) has a maximum opening area.

These ports are arranged in a line in the axial direction of the valve hole 5. By sliding the spool 12 in the axial direction, the communication of the input port P is changed over to either output ports A or B at left or right, and the other output port not communicating with the input P is changed over to an adjacent discharge port.

On each end of the valve body 4 in longitudinal direction, end plates 10 and 11 are mounted respectively. The end plate 10 comprises a piston chamber 14 with a builtin piston 13 slidably provided in axial direction of the spool 12, and a pilot port 15 for supplying and discharging pilot fluid to and from the piston chamber 14. Between the other end plate 11 and the spool 12, a return spring 16 for returning the spool 12 back is provided in a compressed state, and when the pilot fluid is supplied or discharged to and from the piston chamber 14, the spool 12 is reciprocally driven via the piston 13.

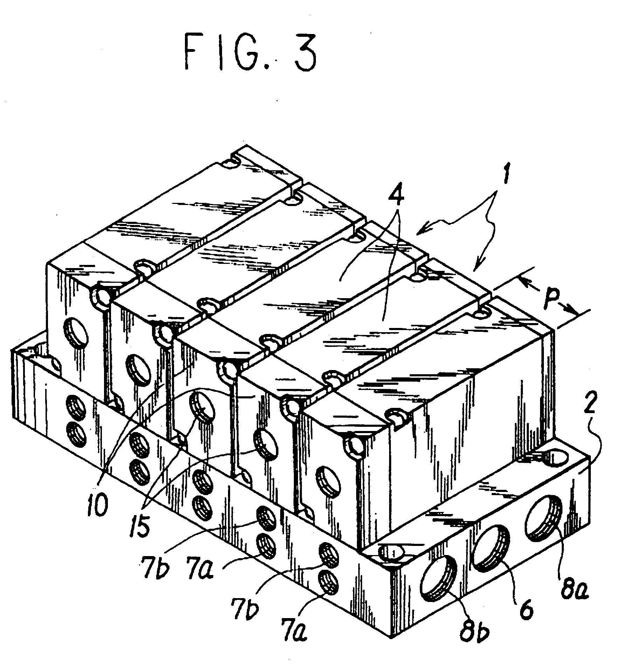

A plurality of the spool type change-over valves with the above arrangement are mounted on a manifold base 2 for manifold piping as shown in Fig. 3, and a manifold type change-over valve assembly is provided. In this case, an inlet port P, outlet ports A and B, and discharge ports EA and EB of each change-over valve 1 communicate with an input hole 6, output holes 7a and 7b, and discharge holes 8a and 8b, respectively. The input hole 6 is connected to an air pressure source, and the output holes 7a and 7b are connected to an air pressure driving device to be driven. The discharge holes 8a and 8b are connected to exhaust pipes for collective discharge.

In order to design such a manifold type change-over valve assembly as described above in an arrangement direction of the change-over valves, it is necessary to reduce mounting pitch p of each change-over valve 1, and lateral width of each change-over valve 1 must be reduced accordingly. However, when lateral width of the change-over valve 1 is reduced, the diameter of opening of each port and inner diameter of the valve hole 5 are also decreased, and this decreases flow rate of the fluid per unit time. In this case, however, if the valve body is elongated in the direction of the valve hole to increase the diameter of opening of the port, the stroke of the spool is increased, and this leads to the reduction of responsiveness. Thus, care must be taken not to impair the responsiveness.

In this respect, in order that a high flow rate of the fluid can be maintained even when the dimension of the width of the valve body 4 in the spool type change-over valve 1 and sizes of each port and of the valve hole 5 are efficiently set in such manner that flow rate of the fluid per unit time reaches the highest value without impairing responsiveness of the change-over valve.

In the above spool type change-over valve 1, when lateral width W of the valve body 4 is determined, the maximum lateral diameter bₘₐₓ (length in inward direction in valve hole), maximum diameter d₀max of the piston 13, i.e. approximately equal to maximum diameter of the flow passage in the valve hole, and maximum diameter of the spool 12 d₁max are necessarily determined as these are proportional to the lateral width W. The minimum diameter d₂max of the portion with the smallest diameter of the spool 12, which forms a passage in axial direction within the valve hole, is determined according to mechanical strength of the spool 12.

If it is supposed that the opening area (cross-sectional area of passage) of each port is equal to each other, and that the cross-sectional area is S₁, and longitudinal length of the port (length in axial direction in the valve hole) is a, there exists the relationship:${\text{S}}_{\text{1}} \text{= a x b}$ and the maximum value of lateral length b of the port is determined by the lateral width W of the valve body 4, while longitudinal length a can be changed regardless of the lateral width W of the valve body 4.

If it is supposed that the opening stroke of the spool 12 is t₁, the opening area S₂ of an opening in the circumferential direction, which communicates the port with the valve hole 5 when restrictively opened by the spool 12, is given by:${\text{S}}_{\text{2}} {\text{= πd}}_{\text{1}} {\text{x t}}_{\text{1}} \text{.}$ In the above, the maximum value of the diameter d₁ of the spool 12 is determined by the lateral width W of the valve body 4, while opening stroke t₁ of the spool 12 can be changed regardless of the lateral width W of the valve body 4.

Further, the cross-sectional area S₃ of an axial flow passage surrounding the portion with small diameter of the spool 12 in the valve hole 5 is given by:${\text{S}}_{\text{a}} {\text{= π(d}}_{\text{1}} {}^{\text{2}} {\text{- d}}_{\text{2}} {}^{\text{2}} \text{)/4}$ and this is primarily determined by the lateral width W of the valve body 4 and the mechanical strength of the spool 12.

Here, the flow rate per unit time, which is a function required for the spool type change-over valve 1, can be expressed by effective area S₀. For example, effective cross-sectional area S₀ of the entire passage in case the fluid flows from the inlet port P toward the outlet ports A or B is given as a synthesis value of an opening area S₁ of the port P and the ports A or B, an opening area S₂ of an opening in circumferential direction communicating the port with the valve hole 5, and cross-sectional area Sₐ of flow passage in axial direction of the valve hole 5. That is,$\frac{\text{1}}{{\text{S}}_{\text{0}} {}^{\text{2}}} \text{=} \frac{\text{1}}{{\text{S}}_{\text{1}} {}^{\text{2}}} \text{+} \frac{\text{1}}{{\text{S}}_{\text{2}} {}^{\text{2}}} \text{+} \frac{\text{1}}{{\text{S}}_{\text{3}} {}^{\text{2}}} \text{+} \frac{\text{1}}{{\text{S}}_{\text{1}} {}^{\text{2}}} \text{=} \frac{\text{2}}{{\text{S}}_{\text{1}} {}^{\text{2}}} \text{+} \frac{\text{1}}{{\text{S}}_{\text{2}} {}^{\text{2}}} \text{+} \frac{\text{1}}{{\text{S}}_{\text{a}} {}^{\text{2}}}$

On the other hand, the relationship between driving force of the piston 13 and the reactive force of the return spring 16 can be adequately determined as 1 : 1, for example. When the ratio of the force relationship is constant, volume V₀ of the piston chamber 14 exerts influence on response time, and the volume V₀ can be given by:${\text{V}}_{\text{0}} {\text{= (π/4)d}}_{\text{0}} {}^{\text{2}} {\text{x t}}_{\text{0}}$ if it is supposed that the stroke of the piston 13 is t₀. The response time T₀ of the spool type change-over valve 1 can be given by:${\text{T}}_{\text{0}} {\text{= K}}_{\text{1}} {\text{·V}}_{\text{0}} {\text{(where K}}_{\text{1}} \text{is a coefficient)}$

Here, the flow rate per unit time, which is a function required for the spool type change-over valve 1, is proportional to the above-mentioned effective cross-sectional area S₀, and the response time T₀ of the spool type change-over valve must be short. Thus, by taking this into account, the measure η for efficient designing is given by:$\text{η =} \frac{{\text{S}}_{\text{0}}}{{\text{T}}_{\text{0}}}$ However, it is not possible to equally evaluate the effective cross-.sectional area S₀ and the response time T₀. If weights of these values are added, it is generally given by:$\text{η =} \frac{{\text{S}}_{\text{0}} {}^{\text{n}}}{{\text{T}}_{\text{0}} {}^{\text{m}}}$

For the calculation of the above equations 3 or 4 , it is assumed that b and d₁ are proportional to W, and the above equation 1 is calculated. Since:${\text{S}}_{\text{1}} {\text{= a·b = k}}_{\text{1}} {\text{·a·W (k}}_{\text{1}} \text{is a constant)}$${\text{S}}_{\text{2}} {\text{= π·d}}_{\text{1}} {\text{·t}}_{\text{1}} {\text{= k}}_{\text{2}} {\text{·W·t}}_{\text{1}} {\text{(k}}_{\text{2}} \text{is a constant)}$${\text{S}}_{\text{3}} {\text{= π·(d}}_{\text{1}} {}^{\text{2}} {\text{- d}}_{\text{2}} {}^{\text{2}} {\text{)/4 = k}}_{\text{3}} {\text{·W}}^{\text{2}} {\text{(k}}_{\text{3}} \text{is a constant),}$ by substituting these into the equation 1,

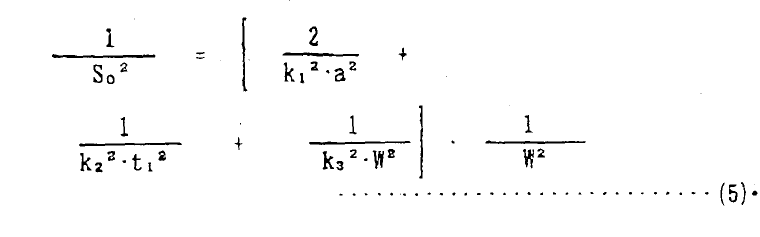

Here, S₂ is changeable according to length t₁ of the opening in axial direction by rand of the spool 12, and the length t₁ is also influenced by the stroke t₀ of the piston 13 (opening stroke of the spool), but it is a value, which can be set relatively arbitrarily according to the other factors, and S₂ is thus negligible. S₃ is influenced by d₂, which is relatively independant of the size of the valve body, and it has relatively less possibility to influence to the longitudinal length a of the port. Thus, by neglecting these to simplify the calculation, S₀ can be for S₁ alone as follows:${\text{S}}_{\text{0}} {\text{= k}}_{\text{0}} \text{·a·W}$

The stroke t₀ of the piston 13 is changed in proportion to longitudinal length a of each port, and diameter d₀ of the piston can be regarded as proportional to W. Thus, the response time T₀ given by the equation 2 can be expressed as:${\text{T}}_{\text{0}} {\text{= K}}_{\text{1}} {\text{·V}}_{\text{0}} {\text{= K}}_{\text{1}} {\text{·(π/4)d}}_{\text{0}} {}^{\text{2}} {\text{x t}}_{\text{0}} {\text{= K}}_{\text{2}} {\text{·a·W}}^{\text{2}} {\text{(K}}_{\text{2}} \text{is a constant)}$

Thus, the equation 4 can be calculated by these values, while there are the problems of how the weight of each of the effective cross-sectional area S₀ and the response time T₀ should be added and how m and n should be set.

In this respect, the present inventor took note of the longitudinal length a of the port and the lateral width W of the valve body 4, and experiments and calculations were carried out. As a result, it was found that the value of a/W² is effective as a characteristic value to evaluate performance characteristics of the spool type change-over valve and that the spool type change-over valve gives the desired performance characteristics when the above value is within the range of 1.4 to 2.5 × 10⁻², or more preferably, 1.5 to 2.2 × 10⁻². If the above assumption and simplified calculation do not cause substantial error, this corresponds to the case where m = 3 and n = 4.

It has been confirmed that performance characteristics of the spool type change-over valve are by two times or more higher according to the measurement of the flow rate as described below, and that the desired value of the response time of at least 20 ms, or more preferably 10 ms, can be attained.

This is given by:$\text{η =} \frac{{\text{S}}_{\text{0}} {}^{\text{n}}}{{\text{T}}_{\text{0}} {}^{\text{m}}} {\text{= F (a/W}}^{\text{2}} \text{)}$ where F is a symbol for function. This means that η takes a value higher than a certain value when the value of (a/W²) × 100 is within the range of 1.4 to 2.5.
Because it is difficult to measure the value of η itself, this value has not been numerically determined. By trial products with valve component parts having different dimensions, the results given below could be obtained. In the table below, when the flow rate reaches approximately two times or more compared with conventional case having the same value of W, the case is marked as ○. The case where response time is 20 ms or less is marked as O in the valuation of the responsiveness. Other cases are given by X.

| Products according to the present invention | | | | | |
|---|---|---|---|---|---|
| No. | W | a | $\frac{\text{a}}{{\text{W}}^{\text{2}}}$ x 100 | Evaluation of flow rate | Evaluation of responsiveness |
| 1 | 10 | 1.9 | 1.90 | ○ | ○ |
| 2 | 15 | 3.4 | 1.5 | ○ | ○ |
| 3 | 18 | 5.0 | 1.54 | ○ | ○ |
| 4 (comparative example) | 10 | 2.6 | 2.60 | ○ | × |

| Conventional products | | | | | |
|---|---|---|---|---|---|
| No. | W | a | $\frac{\text{a}}{{\text{W}}^{\text{2}}}$ x 100 | Evaluation of flow rate | Evaluation of responsiveness |
| 1 | 10 | 1.2 | 1.20 | | |
| 2 | 15 | 2.4 | 1.07 | | |
| 3 | 18 | 3.3 | 1.02 | | |
| 4 | 23 | 3.8 | 0.74 | | |
| 5 | 32 | 9.5 | 0.93 | | |

## Claims

1. A spool type change-over valve, comprising a valve body (4) in oblong rectangular parallelopiped form having a plurality of ports (P,A,B,EB,EA) to pass pressure fluid and a valve hole (5) communicating with these ports (P,A,B,EB,EA), a spool (12) provided slidably in axial direction within the valve hole (5), and a piston (13) for driving the spool (12) by a pilot fluid, whereby the flow direction of the fluid between the plurality of ports (P,A,B,EB,EA) is changed by sliding the spool (12) in the axial direction by means of the piston (13), characterized in that the shape of the opening of each of the ports (P,A,B,EB,EA) is rectangular, the inner diameter of the valve hole and the lateral length of opening, i.e. the length of each port (P,A,B,EB,EA) in the inward direction in the valve hole (5), are set to approximately the largest values as allowed by the lateral width W of the valve body (4) to withstand the designed stresses, and the longitudinal length a of the opening of each port (P,A,B,EB,EA), i.e. the length of each port in the axial direction in the valve hole (5), is set to such a size that a characteristic value given by a/W² is 1.4 to 2.5 x 10⁻².

2. A spool type change-over valve as claimed in Claim 1 in which the said characteristic value given by a/W² is 1.5 to 2.2 x 10⁻².

3. A manifold type change-over valve assembly comprising a plurality of spool type change-over valves as claimed in Claim 1 or Claim 2 mounted on a manifold base (2) for manifold piping.

## Patentansprüche

1. Spulen-Umstellventil, mit einem Ventilkörper (4) in länglicher rechteckiger Parallelepipedform, der mehrere Ein-/ Auslaß-Öffnungen (P,A,B,EB,EA), um Druckfluid durchzuleiten, und eine Ventilbohrung (5), die mit diesen Ein-/Auslaß-Öffnungen (P,A,B,EB,EA) in Verbindung steht, eine Spule (12), die in axiale Richtung verschiebbar innerhalb der Ventilbohrung (5) vorgesehen ist, und einen Kolben (13) zum Antreiben der Spule (12) durch ein Steuerfluid aufweist, wodurch die Fließrichtung des Fluids zwischen den mehreren Ein-/Auslaß-Öffnungen (P,A,B,EB,EA) durch Verschieben der Spule (12) in die axiale Richtung mittels des Kolbens (13) geändert wird, dadurch gekennzeichnet, daß die Form der Öffnung jeder der Ein-/Auslaß-Öffnungen (P,A,B,EB,EA) rechteckig ist, der Innendurchmesser der Ventilbohrung und die seitliche Öffnungslänge, d.h. die Länge jeder Ein-/Auslaß-Öffnung (P,A,B,EB,EA) in die Einwärtsrichtung in der Ventilbohrung (5), so festgelegt sind, daß sie annährend die größten Werte sind, wie sie durch die seitliche Breite W des Ventilkörpers (4) zugelassen werden, um den vorgesehen Spannungen standzuhalten, und die longitudinale Länge a der Öffnung jeder Ein-/Auslaß-Öffnung (P,A,B,EB,EA), d.h. die Länge jeder Ein-/Auslaß-Öffnung in die axiale Richtung in der Ventilbohrung (5), auf ein solche Größe festgelegt ist, daß ein charakteristischer Wert, der durch a/W² gegeben ist, 1,4 bis 2,5 x 10⁻² beträgt.

2. Spulen-Umstellventil nach Anspruch 1, in dem der charakteristische Wert, der durch a/W² gegeben ist, 1,5 bis 2.2 x 10⁻² beträgt.

3. Verteiler-Umstellventilaufbau, der mehrere Spulen-Umstellventile nach Anspruch 1 oder 2 aufweist, die auf einer Verteilergrundplatte (2) für eine Verteilerrohrleitung befestigt sind.

## Revendications

1. Vanne de commutation du type à tiroir, comportant un corps de vanne (4) ayant une forme de parallélépipède rectangle oblong ayant plusieurs orifices (P, A, B, EB, EA) pour laisser passer du fluide sous pression et un trou de vanne (5) communiquant avec ces orifices (P, A, B, EB, EA), un tiroir (12) agencé de manière coulissante dans une direction axiale dans le trou de vanne (5), et un piston (13) pour entraîner le tiroir (12) par un fluide pilote, de sorte que la direction d'écoulement du fluide entre les plusieurs orifices (P, A, B, EB, EA) est changée par coulissement du tiroir (12) dans la direction axiale par l'intermédiaire du piston (13), caractérisée en ce que la forme de l'ouverture de chacun des orifices (P, A, B, EB, EA) est rectangulaire, le diamètre intérieur du trou de vanne et la longueur latérale de l'ouverture, c'est-à-dire la longueur de chaque orifice (P, A, B, EB, EA) dans la direction vers l'intérieur du trou de vanne (5), sont établis pour être approximativement les valeurs les plus grandes permises par la largeur latérale W du corps de vanne (4) pour résister aux contraintes conçues, et la longueur longitudinale a de l'ouverture de chaque orifice (P, A, B, EB, EA), c'est-à-dire la longueur de chaque orifice dans la direction axiale du trou de vanne (5) est établie à une dimension telle qu'une valeur caractéristique donnée par A/W² est de 1,4 à 2,5 × 10⁻².

2. Vanne de commutation du type à tiroir selon la revendication 1, dans laquelle ladite valeur caractéristique donnée par A/W² est de 1,5 à 2,2 × 10⁻².

3. Ensemble de vanne de commutation du type collecteur comportant plusieurs vannes de commutation du type à tiroir selon la revendication 1 ou 2, agencées sur une base de collecteur (2) pour canalisation de collecteur.
